# FASCICULE DE BREVET EUROPEEN

(11) **EP 3 188 378 B1**
(45) Date de publication et mention de la délivrance du brevet: **26.09.2018**
(21) Numéro de dépôt: 16204572.8
(22) Date de dépôt: 16.12.2016
(51) Int. Cl.: H04B 7/185

(54) **ROUTAGE ENTRE NOEUDS DANS UN SYSTÈME SATELLITAIRE À TRAVERS UN SATELLITE OU À TRAVERS UN SATELLITE ET UNE STATION CENTRALE.**
LEITUNG ZWISCHEN KNOTEN IN EINER SATELLITENANORDNUNG DURCH EINEM SATELLITEN ODER DURCH EINEN SATELLITEN UND EINE ZENTRALSTATION.
ROUTING BETWEEN NODES IN A SATELLITE SYSTEM THROUGH A SATELLITE OR THROUGH A SATELLITE AND A CENTRAL STATION.

(30) Priorité: 29.12.2015 FR 1502716
(43) Date de publication de la demande: 05.07.2017
(73) Titulaire: Thales, 92400 Courbevoie (FR)
(72) Inventeur: SOULIE, Antoine, 92622 Gennevilliers Cedex (FR); TOURET, Marc, 92622 Gennevilliers Cedex (FR); CHEVALLIER, Michel, 92622 Gennevilliers Cedex (FR)
(74) Mandataire: Priori, Enrico

(56) Documents cités:
- EP-A1- 2 590 455
- WO-A1-00/77656
- WO-A2-2008/077061
- US-A1- 2006 126 576

## Description

L'invention se situe dans le domaine technique des télécommunications par satellite, et concerne plus particulièrement les topologies de déploiement de tels réseaux.

Actuellement, deux grands types de topologies de déploiement d'un réseau par satellite sont employés : la topologie dite de « réseau maillé » (en anglais « MESH network ») et la topologie dite « en étoile ».

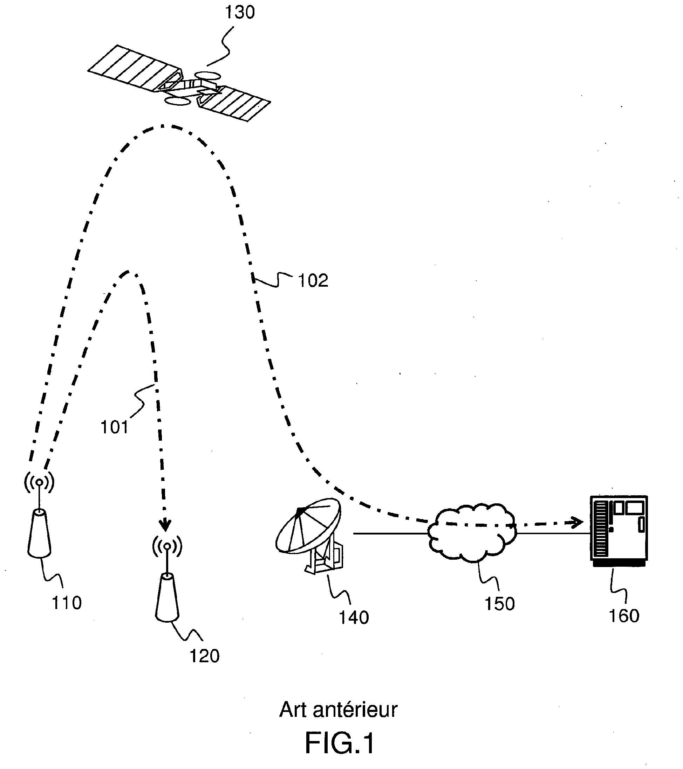

Dans les réseaux maillés, illustrés dans la figure 1 et décrits plus en détail par la suite, l'ensemble des noeuds du réseau sont reliés par l'intermédiaire du satellite, et peuvent échanger directement des données. L'avantage d'une telle topologie provient de ce que les temps de latence sont minimisés, ces temps de latence étant limités au temps de propagation depuis le noeud à l'origine de l'émission vers le satellite et au temps de propagation entre le satellite et le noeud destinataire. L'inconvénient de cette topologie provient de ce que les noeuds émetteur et destinataire ne sont pas forcément des passerelles satellites disposant d'antennes directives à fort gain correctement positionnées. Ainsi, le gain antennaire des différents noeuds étant limité, le bilan de liaison ne permet pas d'utiliser des schémas de modulation et de codage des données à forte efficacité spectrale, et limite donc les débits de transmission.

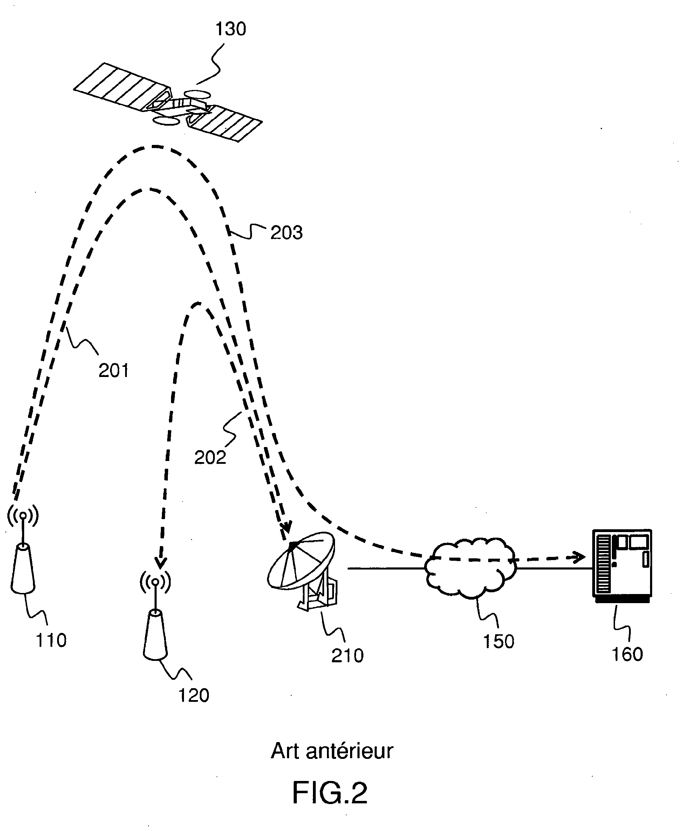

De manière à fournir des débits plus élevés, il est connu un deuxième type de topologie, illustré dans la figure 2 et décrit plus en détail par la suite, la topologie dite « en étoile ». Dans ces réseaux, les noeuds transmettent et reçoivent l'ensemble des données en deux bonds : un premier bond à destination d'un équipement central, appelé hub, qui réalise à la fois le rôle de concentrateur, de commutateur et de routeur, et un deuxième bond depuis le hub vers l'équipement de réception. L'équipement central bénéficie généralement d'une antenne directive de grand diamètre pointée vers le satellite, apportant ainsi du gain à la liaison, ce qui permet d'utiliser des schémas de modulation et de codage à très forte efficacité spectrale, et donc de faire transiter des données à haut débit. L'inconvénient de ce type topologie est sa latence. En effet, pour transmettre des données depuis un émetteur vers un récepteur, le message parcours la distance émetteur-satellite, satellite-concentrateur, concentrateur-satellite, et satellite-récepteur. Le temps de latence est donc au moins le double de celui de la topologie en réseau maillé, et peut s'avérer trop élevé pour faire passer des données à latence contrainte, comme par exemple de la voix. Les ressources spectrales sont également augmentées par rapport au cas de la topologie de réseau maillé, du fait du double bond émetteur-concentrateur-récepteur

Le choix de la topologie du réseau satellitaire est donc réalisé en fonction du type de données à transmettre, les réseaux de diffusion vidéo s'appuyant généralement sur des topologies de réseau en étoile, tandis que les réseaux de transmission de phonie s'appuient généralement sur des réseaux maillés.

Afin de fournir une topologie de réseau satellitaire moins dépendante du type de données transmises, il est connu des réseaux tels que celui décrit dans la demande de brevet Européen EP 2 590 455 A1, qui associent les deux types de topologies. Dans l'art antérieur, les deux types de services sont portés par deux types de réseau distincts ayant chacun leurs ressources spectrales propres, et configurés pour l'un sur une topologie en étoile et pour l'autre sur une topologie maillée. En effet, pour accéder à un service donné, un terminal qui ne serait équipé que d'un seul modem devrait demander une reconfiguration du réseau pour accéder à un autre service. Cette reconfiguration a pour inconvénients une interruption de service réseau pour tous les autres terminaux, ce qui le rend peu envisageable en pratique.

De manière à utiliser les mêmes ressources spectrales, les deux types de réseaux peuvent se voir attribuer des intervalles temporels distincts, mais la configuration de la trame temporelle décrivant ces différents intervalles est alors figée et le système n'offre que peu de flexibilité de fonctionnement. De plus, il requiert une synchronisation des différents équipements sur une même trame temporelle pouvant s'avérer complexe à mettre en oeuvre.

Ainsi, selon l'art antérieur, pour accéder à des services multimédia, phonie, data et vidéo, un usager devra donc disposer de deux modems, l'un présent sur le réseau maillé portant le service phonie et les données peu volumineuses à latence contrainte, et l'autre présent sur le réseau en étoile portant les services data et vidéo. Les deux modems se voient chacun distribués une adresse IP propre, de telle sorte que le terminal utilisateur doit être équipé d'une fonction de routage IP tenant compte de la nature du service pour router les flux.

Cette solution présente donc au moins trois inconvénients :
- manque d'efficacité spectrale : la présence de deux réseaux, l'un en mode étoilé et l'autre en mode maillé, ayant chacun des ressources propres qui ne peuvent pas être réutilisées par l'autre réseau quand elles ne sont pas utilisées, la ressource globale nécessaire au système est augmentée,
- complexité et compacité du terminal : l'art antérieur nécessite que le terminal utilisateur soit équipé de deux modems, ce qui le rend plus complexe, plus volumineux, plus consommateur et plus onéreux, et
- implémentation : le terminal utilisateur doit nécessairement être équipé d'une fonction de routage IP.

L'invention propose une topologie de réseau mélangeant réseau maillé et réseau en étoile, et ce de manière intégrée. De ce fait, le réseau selon l'invention ne nécessite pas d'augmentation de la bande passante utilisée, ni d'implémentation particulière par rapport aux topologies réseau classiques.

A cet effet, l'invention décrit un procédé de transmission d'un flux de données entre un émetteur et au moins un récepteur dans un réseau satellitaire comprenant un concentrateur. Le procédé est caractérisé en ce qu'un label de commutation est inséré dans un entête du flux de données selon sa nature, ledit label de commutation indiquant si le flux de données est transmis au récepteur selon une route directe ou s'il est transmis au récepteur selon une route indirecte via ledit concentrateur, et en ce que, lorsque ledit label de commutation indique que le flux de données est transmis selon une route indirecte, ledit concentrateur modifie le label de commutation du flux de données pour indiquer qu'il est transmis selon une route directe, et retransmet le flux de données modifié.

Dans le procédé de transmission d'un flux de données selon l'invention, l'insertion dudit label de commutation comprend les étapes de :
- identification de la nature dudit flux de données,
- détermination d'un label de commutation à insérer dans le flux de données en fonction de sa nature, et
- insertion dudit label de commutation dans le flux de données.

Avantageusement, l'étape de détermination d'un label de commutation à insérer dans le flux comprend la consultation d'une table de correspondance entre des natures de flux de données et des labels de commutation.

Selon un mode de réalisation du procédé de transmission d'un flux de données selon l'invention, le label de commutation comprend en outre des informations sur la nature dudit flux de données.

Dans un mode de réalisation, le procédé de transmission d'un flux de données selon l'invention comprend en outre une étape d'analyse de la qualité des liens RF préalable à la détermination d'un label de commutation à insérer dans le flux de données.

Dans un mode de réalisation du procédé de transmission d'un flux de données, la retransmission dudit flux de données par ledit concentrateur comprend une étape d'extraction du label de commutation dudit flux de données, et lorsque ledit label indique que le flux de données est transmis selon une route indirecte :
- une étape de modification du label de commutation du flux de données, de manière à indiquer que le flux de données est transmis selon une route directe, et
- une étape de transmission du flux de données modifié.

Avantageusement, les flux de données transmis selon une route directe et les flux de données transmis selon une route indirecte utilisent des mêmes ressources fréquentielles.

L'invention adresse également un procédé d'émission d'un flux de données dans un réseau satellitaire comprenant au moins un concentrateur. Le procédé d'émission selon l'invention est caractérisé en ce qu'il comprend les étapes de :
- identification de la nature dudit flux de données,
- détermination d'un label de commutation à insérer dans le flux en fonction de sa nature, ledit label de commutation indiquant si le flux de données est transmis au récepteur selon une route directe ou s'il est transmis au récepteur selon une route indirecte via ledit concentrateur,
- insertion dudit label de commutation dans le flux de données, et
- transmission du flux de données contenant ledit label de commutation.

L'invention adresse également un émetteur transmettant un flux de données dans un réseau satellitaire comprenant au moins un concentrateur, caractérisé en ce qu'il est configuré mettre en oeuvre le procédé d'émission d'un flux de données décrit précédemment.

L'invention adresse également un procédé de retransmission d'un flux de données émis par un émetteur à destination d'au moins un récepteur dans un réseau satellitaire. Le procédé de retransmission selon l'invention est caractérisé en ce qu'il comprend une étape d'extraction d'un label de commutation dudit flux de données, ledit label indiquant si le flux de données est transmis selon une route directe ou s'il est transmis selon une route indirecte via ledit concentrateur, et lorsque ledit label indique que le flux de données est transmis selon une route indirecte :
- une étape de modification du label de commutation du flux de données, de manière à indiquer qu'il est transmis selon une route directe, et
- une étape de transmission du flux de données modifié.

Selon un mode de réalisation du procédé de retransmission d'un flux de données selon l'invention, le label de commutation contient en outre une information sur la nature du flux de données transmis, cette information étant utilisée pour l'ordonnancement de files d'attentes lors de la retransmission du flux de données modifié.

L'invention adresse également un concentrateur, dans un réseau satellitaire comprenant au moins un émetteur transmettant un flux de données vers un récepteur, ledit flux de données contenant un label de commutation, caractérisé en ce qu'il est configuré pour mettre en oeuvre le procédé de retransmission d'un flux de données décrit précédemment.

L'invention adresse également un procédé de réception d'un flux de données dans un réseau satellitaire comprenant au moins un concentrateur. Le procédé est caractérisé en ce qu'un label de commutation est extrait dudit flux de données, ledit label indiquant si le flux de données est transmis par un émetteur selon une route directe ou s'il est transmis par un émetteur selon une route indirecte via ledit concentrateur, et en ce que le flux de données est traité en fonction dudit label de commutation extrait.

Dans un mode de réalisation du procédé de réception d'un flux de données selon l'invention, le flux de données reçu est rejeté lorsque ledit label de commutation indique que le flux de données est transmis selon une route indirecte.

Dans un autre mode de réalisation du procédé de réception d'un flux de données selon l'invention, le flux de données reçu est mémorisé lorsque ledit label de commutation indique que le flux de données est transmis selon une route indirecte, et utilisé lorsque la réception du même flux de données avec un label de commutation indiquant qu'il est transmis selon une route indirecte est erronée.

L'invention adresse enfin un récepteur, dans un réseau satellitaire comprenant au moins un concentrateur, caractérisé en ce qu'il est configuré pour mettre en oeuvre le procédé de réception d'un flux de données selon décrit précédemment.

### Description

L'invention sera mieux comprise et d'autres caractéristiques et avantages apparaîtront mieux à la lecture de la description qui suit, donnée à titre non limitatif, et grâce aux figures annexées parmi lesquelles :
- la figure 1 illustre le fonctionnement d'un réseau satellitaire basé sur une topologie de réseau maillé, selon l'état de la technique ;
- la figure 2 illustre le fonctionnement d'un réseau satellitaire basé sur une topologie de réseau en étoile, selon l'état de la technique ;
- la figure 3 illustre le fonctionnement d'un réseau satellitaire selon l'invention ;
- la figure 4 schématise un flux de données encapsulées selon l'invention ;
- la figure 5 présente les différentes étapes du procédé selon l'invention lorsqu'il est mis en oeuvre pour l'émission d'un flux de données ;
- la figure 6 présente les différentes étapes du procédé selon l'invention lorsqu'il est mis en oeuvre pour la répétition d'un flux de données ;
- La figure 7 présente les différentes étapes du procédé selon l'invention lorsqu'il est mis en oeuvre pour la réception d'un flux de données.

La figure 1 illustre le fonctionnement d'un réseau satellitaire 100 basé sur une topologie de réseau maillé, selon l'état de la technique.

Dans ce réseau, une station d'émission 110, pouvant être un terminal satellite, une passerelle satellite ou tout autre équipement apte à communiquer dans un réseau satellitaire, transmet un message à destination d'une station de réception 120, qui peut elle aussi être n'importe quel type d'équipement satellitaire. L'émetteur et le récepteur ne disposent pas nécessairement d'antennes directives à fort gain pointées vers le satellite.

La transmission de données 101 entre la station d'émission et la station de réception est alors réalisée directement, ne transitant que par l'intermédiaire du satellite 130.

A titre d'illustration, si l'émetteur et le récepteur disposent tous deux d'une antenne apportant un gain de 3dB, alors le gain d'antenne sur la liaison émetteur récepteur est de 6dB. La latence liée à la propagation du signal, lorsque le satellite est un satellite géostationnaire, est alors de 2 * 120ms = 240ms.

Généralement, ce type de réseau comprend également un concentrateur 140 (pouvant également être désigné sous le nom de passerelle satellite, routeur, commutateur ou hub), destiné à faire le lien entre le réseau satellitaire et un autre réseau 150, tel que par exemple le réseau internet. Ainsi, la station d'émission peut émettre (ou recevoir) à destination d'un équipement 160 situé en dehors du réseau satellitaire en transmettant (ou recevant) les données 102 par l'intermédiaire du satellite 130 et du concentrateur 140, qui est en charge de router le message vers le réseau sortant, et l'équipement destinataire.

La figure 2 illustre le fonctionnement d'un réseau satellitaire 200 basé sur une topologie de réseau en étoile, selon l'état de la technique.

Dans ce réseau, lorsque la station d'émission 110 transmet un message à destination d'une station de réception 120, ce message réalise deux bonds : un premier bond 201 à destination d'un concentrateur 210 et un second bond 202 depuis le concentrateur vers la station de réception 220. Le concentrateur joue le rôle d'équipement central au réseau, répétant l'ensemble des messages pour une réception par les destinataires finaux. Tous les messages transitent par ce concentrateur, qui dispose d'une antenne directive à fort gain, contrairement à la station d'émission et à la station de réception.

A titre d'illustration, si l'émetteur et le récepteur disposent tous deux d'une antenne apportant un gain de 3dB, et que le concentrateur dispose d'une antenne directive de 20dB, alors le gain d'antenne sur le segment émetteur - concentrateur est de 23dB, identique à celui observé sur le segment concentrateur - récepteur, soit au final un gain 40dB supérieur à celui obtenu sur le réseau maillé. Ce gain important permet d'utiliser des schémas de modulation et de codage à forte efficacité spectrale, et donc d'obtenir des débits élevés. La latence liée à la propagation du signal, lorsque le satellite est un satellite géostationnaire, est alors de 4 * 120ms = 480ms.

Le concentrateur 210 permet également de relier le réseau satellitaire à un ou plusieurs réseaux externes 150. Ainsi, la station d'émission peut émettre (ou recevoir) à destination d'un équipement 160 situé en dehors du réseau satellitaire en transmettant (ou recevant) les données 203 par l'intermédiaire du satellite 130 et du concentrateur 210, qui est en charge de router le message vers le réseau sortant et l'équipement destinataire.

Les standards actuels de communications satellites, comme par exemple le DVB-S, le DVB-S2 ou le DVB-RCS (acronymes anglais pour Digital Video Broadcast - Satellite, DVB - Satellite Second génération, et DVB - Return Channel via Satellite), permettent l'implémentation de l'une ou de l'autre des topologies mais sans atteindre la flexibilité proposée par l'invention.

Par exemple, le DVB-S et le DVB-S2, sont orientés vers la diffusion de données adressées et de vidéos depuis un concentrateur, et ne prévoient pas de voie de retour. Ils doivent donc être couplés avec des voies utilisant le standard DVB-RCS pour permettre l'implémentation d'une voie retour, et donc la réalisation d'une connexion du terminal vers le concentrateur.

La configuration et l'utilisation de deux canaux DVB-RCS, par chacun des terminaux, permet la mise en oeuvre d'une connexion directe entre deux terminaux, mais n'est pas adaptée à la rediffusion des messages depuis le concentrateur car le DVB-RCS est limité en débit et en bande passante.

Pour un réseau de N terminaux mélangeant topologie de réseau en étoile et topologie en réseau maillé, il est donc nécessaire de disposer d'un canal DVB-S2 pour le concentrateur et d'au moins N canaux DVB-RCS, écoutés par chacun des terminaux pour la voie de retour vers le concentrateur et pour le maillage entre terminaux. Cette topologie est connue sous le nom de MF-TDMA (acronyme anglais pour Multi-Frequency Time Division Multiple Access).

De plus, la mise en oeuvre conjointe du DVB-S2 et du DVB-RCS n'est pas adaptée pour une utilisation multimédia flexible et optimale en mode maillé dans la mesure où le spectre attribué au DVB-S2 n'est pas utilisable autrement que par le concentrateur, et dans la mesure où le terminal doit disposer d'un récepteur en DVB-S2 et d'un émetteur multicanaux en DVB-RCS.

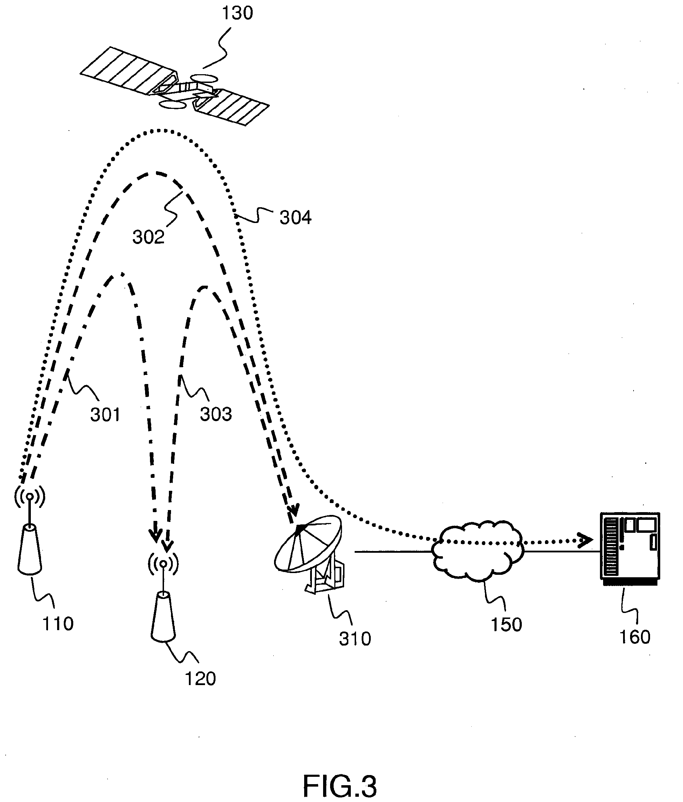

L'invention propose de faire cohabiter les deux topologies de réseau. La figure 3 illustre le fonctionnement d'un réseau de télécommunications selon l'invention mélangeant, simultanément, dans une même bande de fréquence et sans modifier les équipements, des techniques de transmission en étoile et des techniques de transmission maillées. Les moyens à mettre en oeuvre afin de parvenir à un tel mode de fonctionnement sont expliquées par la suite.

Dans le réseau présenté en figure 3, lorsque la station d'émission 110 transmet un message à destination d'une ou de plusieurs stations de réception 120, elle choisi la manière dont ce message leur sera transmis, à savoir :
- selon une route directe, par l'intermédiaire du satellite 130 vers la station de réception, tel que représenté sur le chemin 301, de manière semblable à ce qui se fait dans un réseau maillé, ou
- selon une route indirecte, par l'intermédiaire du satellite 130 et d'un concentrateur 310 (pouvant être également désigné sous le nom de passerelle satellite, routeur, concentrateur, hub), réalisant ainsi un premier bond 302 vers le concentrateur, puis un deuxième bond 303 depuis le concentrateur vers la station de réception 120, toujours par le biais du satellite 130, de manière semblable à ce qui se fait dans un réseau en étoile.

Le choix entre les deux chemins de transmission est fonction du type de flux de données transmis, selon que celui-ci privilégie la latence ou le débit.

Le concentrateur 310 permet également de relier le réseau satellitaire à un ou plusieurs réseaux externes 150. Ainsi, la station d'émission peut émettre (ou recevoir) à destination d'un équipement 160 situé en dehors du réseau satellitaire en transmettant (ou recevant) les données 304 par l'intermédiaire du satellite 130 et du concentrateur 310, qui est en charge de router le message vers le réseau sortant et l'équipement destinataire.

L'invention ne nécessite donc pas la mise en oeuvre d'équipements supplémentaires par rapport aux réseaux satellitaires de l'état de l'art.

Le choix du chemin à emprunter lors de la transmission du flux de données est réalisé par l'émetteur, à partir du type de flux transmis. Ainsi, par exemple, un flux vidéo sera de préférence transmis par le biais du concentrateur afin de maximiser le bilan de liaison et donc le débit, tandis qu'un flux de phonie sera de préférence transmis selon une route directe, afin de minimiser la latence de transmission.

L'invention peut être implémentée en utilisant des liens DVB-RCS à la fois pour les routes directes et pour les routes indirectes. Par rapport à l'état de l'art (réseau maillé), elle bénéficie alors du gain antennaire apporté par le concentrateur, ce qui lui permet de pouvoir exploiter le standard DVB-RCS dans ses débits les plus élevés afin de faire transiter de la vidéo, les différents noeuds du réseau ne comprenant alors qu'un unique équipement radio.

Elle peut également être implémentée de manière semblable à l'état de l'art (réseau maillé), en utilisant des liaisons DVB-RCS pour les routes directes, et des liaisons DVB-S ou DVB-S2 pour le deuxième bond 303 entre le concentrateur et les noeuds de réception des routes indirectes. Les équipements nécessitent alors d'être équipés de deux modems, la ressource spectrale consommée est la somme des ressources d'un réseau maillé et des ressources d'un réseau en étoile, mais l'invention bénéficie alors d'une souplesse de sélection de la route empruntée par les flux de données.

Enfin, l'invention peut être mise en oeuvre en utilisant des liaisons basées sur des techniques de communication standardisées ou non, permettant de mieux multiplexer les ressources que le DVB-RCS, et présentant une large gamme de débits possibles, comme c'est par exemple le cas pour le standard militaire STANAG 4606. De cette manière, les équipements nécessitent un seul équipement radio, la ressource fréquentielle est mutualisée, et le choix des routes empruntées par les messages bénéficient de toute la souplesse apportée par l'invention.

Lors de la transmission d'un flux de données, l'émetteur doit tout d'abord identifier la nature du flux transmis (phonie, internet, vidéo, messagerie, etc...).

Pour ceci, lorsqu'il existe, l'émetteur peut s'appuyer sur le champ DSCP (acronyme anglais pour Differentiated Services Code Point) positionné dans l'entête IP des paquets de données. Ce champ est interprété par le modem pour connaitre le type des données contenues dans le flux. Par exemple si le champ DSCP fait référence à des paquets contenant des échantillons de VoIP, alors le modem compte de cette information dans la suite des traitements.

Lorsque ce champ n'est pas disponible, l'émetteur peut recourir à une capacité d'inspection des paquets, connue de l'art antérieur sous le nom anglais de « Deep Packet Inspection ». Or cette capacité n'est pas accessible dans le cas de réseaux procédant au chiffrement des paquets.

Si les paquets sont chiffrés, alors l'émetteur peut disposer d'un équipement particulier, comme par exemple un Session Border Controller (SBC), permettant d'apprendre la nature et les paramètres de transport des flux (latence, débit, jigue), via une signalisation explicite de type SIP (acronyme anglais pour Session Initiation Protocol) provenant des serveurs applicatifs, même lorsque les flux transportés sont des flux de données chiffrées. Le SBC est un équipement complémentaire à un modem satellite qui doit alors être ajouté au niveau du concentrateur 310 et de chaque station.

L'identification de flux de données est une opération classique, qui est par exemple réalisée par le coeur de réseau dans les réseaux de quatrième génération, dits LTE (acronyme anglais pour Long Term Evolution), pour prioriser les transmissions.

Lorsque la nature du flux de données transporté a été identifiée, la station d'émission choisi le chemin que le flux va devoir emprunter. Pour ceci, une méthode d'implémentation simple consiste à fournir à la station d'émission une table faisant le lien entre les différents types de flux et le type de transmission à utiliser (route directe ou indirecte).

Cette décision peut être améliorée en utilisant les informations de QOS des liens SATCOM (acronyme anglais pour Quality Of Service, ou qualité de service) échangées dans l'ensemble du réseau de télécommunication, lorsqu'elles sont disponibles. Ces informations de QOS sont des données de signalisation qui renseignent l'ensemble des noeuds du réseau sur la qualité des liens RF (Radio Fréquence), et qui sont utilisées pour déterminer le schéma de modulation et de codage adapté à la transmission. Ce sont des données communément transmises dans les réseaux satellitaires.

Dans le cas où les informations de QOS ne sont pas disponibles, la station d'émission peut estimer un rapport signal à bruit (en anglais Signal over Noise Ratio, ou SNR) sur les différents liens auxquels elle est reliée, en écoutant les données échangées sur les canaux d'émission et de réception.

Ainsi, la station d'émission 110 souhaitant transmettre un flux de données de phonie directement à la station de réception 120, par l'intermédiaire du chemin 301, analysera la qualité du lien radio sur ce segment. Si la qualité est médiocre, rendant la communication impossible, de par, par exemple, la présence d'un brouilleur intentionnel ou non à proximité de l'une des stations, la station d'émission pourra décider de transmettre le flux de données par l'intermédiaire du concentrateur 310, selon la route indirecte 302-303. De ce fait, elle bénéficiera du gain supplémentaire apporté par les antennes directives du concentrateur, ce qui permettra d'assurer le lien, au détriment de la latence.

A l'inverse, lorsque la qualité sur le lien à deux bonds (302, 303) est mauvaise, de par, par exemple, la présence d'un brouilleur à proximité du concentrateur 310, la station d'émission peut décider de transmettre le message selon la route directe 301 à la station de réception 120, garantissant ainsi la liaison, au détriment du débit.

La station d'émission peut donc utiliser les informations de QOS du réseau pour pondérer la décision sur le chemin de transmission à utiliser.

A partir de la décision prise sur le chemin à utiliser pour la transmission du message, la station d'émission marque le flux de données à transmettre, afin d'indiquer si ce flux doit suivre une route directe ou une route indirecte.

Ce marquage est réalisé au niveau de la couche MAC (Media Access Control, ou couche liaison de données), par le biais de l'insertion d'un label de commutation (nouveau champ) dans l'entête du flux de données.

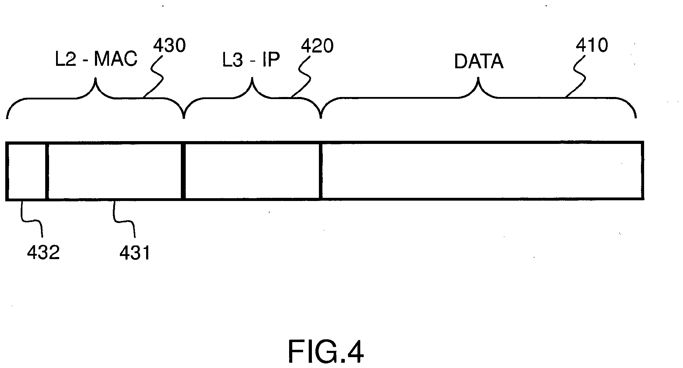

La figure 4 schématise un flux de données encapsulées selon l'invention, comprenant un label de marquage du flux pour commutation par le concentrateur.

Cette figure est une représentation schématique, et donne les grands principes sans décrire de manière exhaustive le contenu des entêtes ajoutés aux paquets de données.

Dans la figure 4, les données 410 sont encapsulées dans des paquets de plus haut niveau. En particulier, les flux de données transportés comprennent un entête IP 420, qui comprend entre autres l'adresse IP de l'émetteur et l'adresse IP du destinataire.

Ils comprennent également un entête MAC 430, qui contient entre autres l'adresse MAC de destination. L'invention propose d'ajouter à cet entête MAC un champ 432, contenant un label de commutation spécifiant le chemin à parcourir pour l'acheminement entre l'émetteur et le destinataire.

Selon un mode de réalisation de l'invention, ce label de commutation est minimaliste. Il ne comprend qu'un unique bit, destiné à indiquer si le flux de données émis doit suivre une route directe ou indirecte. Le concentrateur répète alors les paquets concernés dès que possible.

Selon un autre mode de réalisation de l'invention, le label de commutation est sur plusieurs bits, permettant ainsi de l'enrichir d'informations sur la nature du flux de données transporté, ou sa classe de service. Cette information peut être utilisée par le concentrateur pour gérer l'ordonnancement de ses retransmissions, et positionner le flux de données à retransmettre dans des files d'attente.

Lorsque le concentrateur reçoit un flux de données, il procède tout d'abord à l'extraction du label de commutation, afin de déterminer si les données reçues doivent être répétées ou non. Lorsque c'est le cas, c'est-à-dire lorsque le label de commutation indique que le flux de données est transmis selon une route indirecte, il repositionne le label du flux de données, afin d'indiquer que le message est retransmis selon une route directe à destination du récepteur. Il retransmet alors le flux de données contenant l'entête modifié.

La particularité des spots satellites est que les transmissions au sein d'un même spot satellitaire sont reçues par l'ensemble des terminaux du spot satellitaire. Il n'y a pas de liaison point à point en tant que tel. La station de réception est donc susceptible de recevoir également le premier bond 302 du signal lorsqu'il est transmis à destination du concentrateur.

Lorsque la station de réception reçoit un flux de données, elle procède à l'extraction du label de commutation, afin de déterminer si le message reçu est ou non une transmission ayant pour objectif d'atteindre le concentrateur (premier bond 302 dans le cas d'une émission selon une route indirecte).

Lorsque le message n'est pas destiné au concentrateur, l'adresse IP de destination est extraite, afin de déterminer si la station de réception est bien le destinataire du message.

Lorsque le flux de données contient un label de commutation indiquant qu'il suit une route indirecte, le flux est supprimé, la station attendant sa retransmission par le concentrateur, garantissant ainsi une réception avec un bilan de liaison plus avantageux, et donc moins d'erreurs résiduelles.

Selon un mode de réalisation alternatif, lorsque le label de commutation indique que le flux de données reçu par la station de réception suit une route indirecte, la station de réception le conserve jusqu'à la réception de sa retransmission par le concentrateur (deuxième bond 303). Si les données transmises par le concentrateur contiennent des erreurs mettant en jeu l'intégrité du flux, alors la station de réception pourra tenter le décodage du premier flux reçu et vérifier son intégrité, pour l'utiliser en lieu et place du deuxième. Alternativement, le premier et le deuxième flux reçus peuvent être utilisés conjointement, par le biais d'une technique de recombinaison des signaux reçus, tel qu'un algorithme de MRC (Maximal Ratio Combining).

L'invention permet donc de mettre en oeuvre un réseau satellitaire s'apparentant à la fois à un réseau maillé et à un réseau en étoile, sans utilisation supplémentaire de ressource spectrale ni modification à apporter à l'infrastructure du réseau et aux terminaux. La seule modification apportée consiste à ajouter un champ supplémentaire dans l'entête MAC des paquets de données transmis signalant le chemin que doit emprunter le message pour parvenir au récepteur.

L'adresse MAC et l'adresse IP du destinataire restent inchangés, et ne varient pas lorsque la transmission permute entre une transmission directe et une transmission relayée par le commutateur ou l'inverse. Ainsi, les tunnels IP ne sont pas interrompus.

L'invention porte donc sur un procédé de transmission d'un flux de données entre un émetteur et un récepteur dans un réseau satellitaire, un label de commutation étant inséré dans l'entête de transmission du flux de données selon sa nature, et accessoirement en fonction de la qualité des liens RF. La station d'émission transmet alors le flux de données contenant le label de commutation, ce label indiquant si le message doit être ou non retransmis par le concentrateur 310.

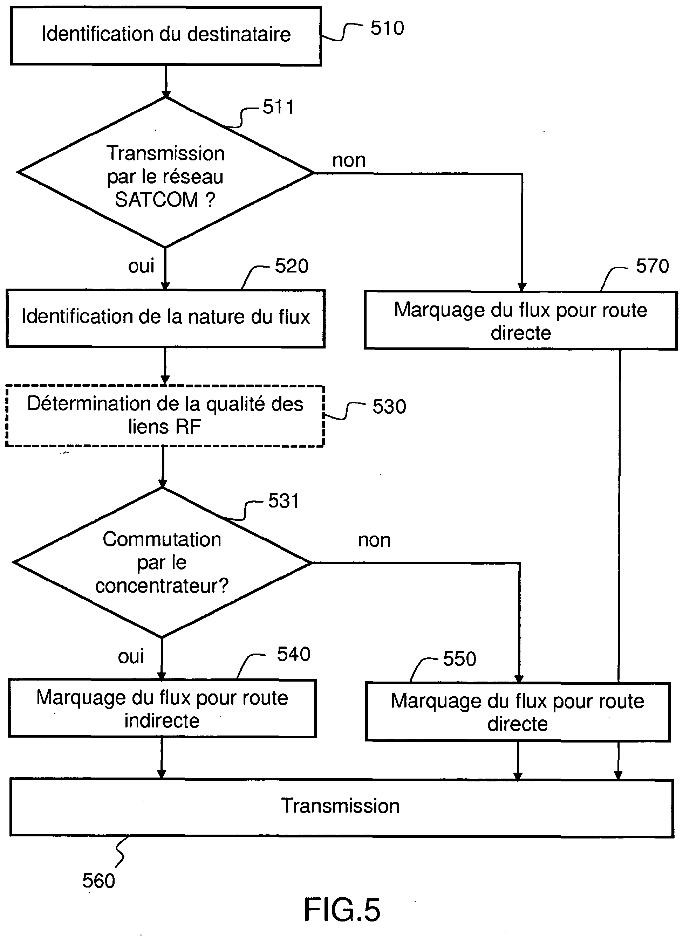

La figure 5 présente les différentes étapes du procédé selon l'invention lorsqu'il est mis en oeuvre pour l'émission d'un flux de données. Certaines de ces étapes, représentées en traits continus, sont obligatoires, les autres étant des étapes avantageuses à l'exécution du procédé.

Le procédé présente une première étape 510 d'identification du destinataire du flux. Cette étape permet de déterminer (511) si le destinataire est un membre du réseau satellitaire, ou s'il est situé dans un réseau externe, dont l'accès se fait par le biais du concentrateur 310.

Il présente une deuxième étape 520, lorsque la transmission a pour destinataire un noeud du réseau de communication satellite, d'identification du type de flux transmis, parmi un ensemble de flux possibles.

Avantageusement, il peut présenter une troisième étape 530 d'analyse de la qualité du lien RF entre l'émetteur et le destinataire, et du lien RF entre l'émetteur et le concentrateur, et du lien entre le concentrateur et le destinataire.

A partir de l'identification du type de flux, et le cas échéant de la qualité des liens RF de transmission, une décision (531) est prise sur le chemin que doit parcourir le flux de données :
- soit une route indirecte, le flux de données étant alors transmis par l'intermédiaire du concentrateur. Un label de commutation, indiquant que le flux est transmis au commutateur pour répétition vers le destinataire (soit selon une route indirecte), est alors positionné dans l'entête MAC des paquets de données (540), ce label pouvant être avantageusement complété par des informations sur la nature du flux transmis ou sa classe de service,
- soit une route directe, le flux de données étant alors transmis directement au destinataire, sans transiter par le concentrateur. Un label de commutation, indiquant que le flux est transmis directement (soit selon une route directe), est alors positionné dans l'entête MAC des paquets de données (550), le cas échéant complété par une information sur la nature du flux transmis ou sa classe de service.

Le flux de données résultant ainsi marqué peut être envoyé par l'émetteur dans le réseau (560).

Lorsque, à l'issue de la première étape (510), le destinataire a été identifié comme n'appartenant pas au réseau satellite, un label indiquant que le flux est transmis selon une route directe est positionné dans l'entête MAC des paquets de données (570). Cet entête est identique à celui positionné dans l'étape 550.

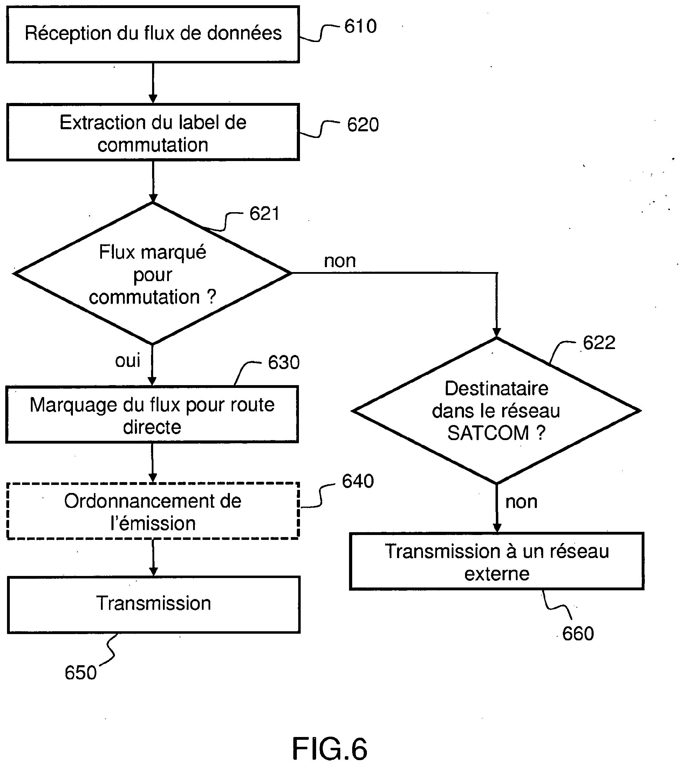

La figure 6 présente les différentes étapes du procédé selon l'invention lorsqu'il est mis en oeuvre pour la retransmission, ou répétition, d'un flux de données. Certaines de ces étapes, représentées en traits continus, sont obligatoires, les autres étant des étapes avantageuses à l'exécution du procédé.

Ainsi, suite à la réception 610 d'un flux de données, le concentrateur réalise une étape 620 d'extraction du label de commutation contenu dans l'entête MAC. A partir de ce label de commutation, le concentrateur détermine (621) si le flux de données doit être retransmis ou non.

Lorsque le label indique que le flux de données suite une route indirecte, et doit donc être retransmis, le concentrateur réalise une étape 630 de commutation du label de commutation, c'est-à-dire qu'il le modifie de manière à ce que celui-ci indique que le message est transmis à son destinataire selon une route directe.

Lorsque le label de commutation contient des informations sur la nature du flux transmis, ou sa classe de service, le concentrateur utilise cette information pour ordonnancer ses files d'attentes. Les flux les plus contraints en latence sont positionnés en priorité haute. Le concentrateur réalisant le multiplexage temporel des flux qu'il retransmet en fonction de leur priorité ou classe de service, la qualité de service globale sur l'ensemble du réseau satellite est améliorée par rapport à une simple répétition des flux.

Le flux de données commuté est ensuite retransmis (650).

Lorsque le label de commutation indique que le flux de données suit une route directe, le concentrateur détermine (622) si le destinataire est un noeud du réseau de communication satellite. Si c'est le cas, le paquet n'est pas pris en compte. Si ce n'est pas le cas, cela signifie que le destinataire est un équipement distant (160) pouvant être atteint par le biais d'un réseau externe (150). Le concentrateur va alors décapsuler l'entête du flux, lui appliquer le marquage IP approprié, et le transmettre à un routeur faisant le lien entre le réseau satellitaire et le réseau externe.

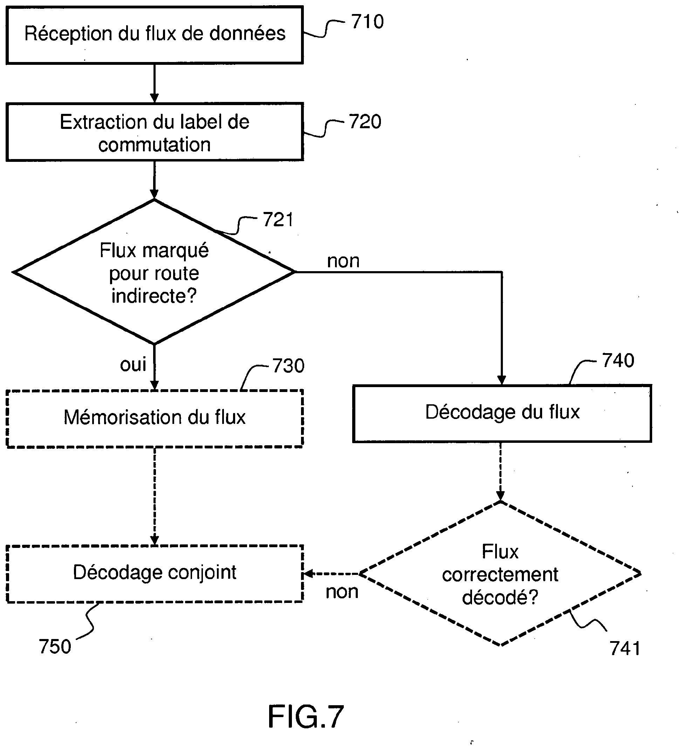

La figure 7 présente les différentes étapes du procédé selon l'invention lorsqu'il est mis en oeuvre pour la réception d'un flux de données. Certaines de ces étapes, représentées en traits continus, sont obligatoires, les autres étant des étapes avantageuses à l'exécution du procédé.

Ainsi, suite à la réception 710 d'un flux de données, la station de réception réalise une étape 720 d'extraction du label de commutation contenu dans l'entête MAC.

A partir de ce label de commutation, la station de réception détermine (721) si le flux de données est un flux destiné à être retransmis selon une route directe, ou selon une route indirecte via le concentrateur 310.

Lorsqu'il est transmis selon une route indirecte, le flux de données n'est pas pris en compte, car il sera retransmis par le concentrateur, bénéficiant ainsi d'un bilan de liaison plus favorable.

Avantageusement, le flux de données est stocké en mémoire, jusqu'à ce qu'il soit reçu de nouveau, en provenance cette fois-ci du concentrateur.

Lorsque le flux de données suit une route directe, celui-ci est décodé et décapsulé. Avantageusement, des informations sur la qualité du décodage permettent de savoir si les données sont reçues correctement ou si elles contiennent des erreurs.

Lorsqu'elles contiennent des erreurs et que le flux de données reçu par le récepteur dont le label de commutation indique qu'il suit une route indirecte a été mémorisé, un mode de réalisation avantageux consiste alors à utiliser ce flux de données, pour l'exploiter conjointement avec le flux de données reçu depuis le concentrateur et incorrectement décodé.

Les procédés décrits en figures 5, 6 et 7 sont destinés à être exécutés respectivement par une station d'émission 110, un concentrateur 310 et une station de réception 120. Ils peuvent être implémentés, par exemple, dans une machine de calcul reprogrammable, tel un processeur, un DSP (acronyme anglais pour Digital Signal Processor, ou processeur de signal numérique), ou un micro contrôleur. Ils peuvent également être implémentés dans une machine de calcul dédiée, tel qu'un ensemble de portes logiques comme un FPGA (acronyme anglais pour Field-Programmable Gate Array, ou réseau de portes programmables) ou un ASIC (acronyme anglais pour Application Specific Integrated Circuit, ou circuits intégrés à application spécifique), ou sous la forme de tout autre module matériel permettant l'exécution de calculs.

L'invention consiste également en une station d'émission configurée pour mettre en oeuvre un mode de réalisation du procédé d'émission tel que décrit en figure 5.

Elle consiste également en un concentrateur configuré pour mettre en oeuvre un mode de réalisation du procédé de répétition tel que décrit en figure 6.

Enfin, elle consiste en une station de réception configurée pour mettre en oeuvre un mode de réalisation du procédé de réception tel que décrit en figure 7.

## Revendications

1. Procédé de transmission d'un flux de données entre un émetteur (110) et au moins un récepteur (120) dans un réseau satellitàire comprenant un concentrateur (310), le procédé étant **caractérisé en ce qu'**un label de commutation (432) est inséré dans un entête du flux de données selon sa nature, ledit label de commutation indiquant si le flux de données est transmis au récepteur selon une route directe ou s'il est transmis au récepteur selon une route indirecte via ledit concentrateur, et **en ce que**, lorsque ledit label de commutation indique que le flux de données est transmis selon une route indirecte, ledit concentrateur modifie le label de commutation du flux de données pour indiquer qu'il est transmis selon une route directe, et retransmet le flux de données modifié.

2. Procédé de transmission d'un flux de données selon la revendication précédente, dans lequel l'insertion dudit label de commutation comprend les étapes de :
• identification (520) de la nature dudit flux de données,
• détermination (531) d'un label de commutation à insérer dans le flux de données en fonction de sa nature, et
• insertion (540, 550, 570) dudit label de commutation dans le flux de données.

3. Procédé de transmission d'un flux de données selon la revendication précédente, dans lequel l'étape de détermination d'un label de commutation à insérer dans le flux comprend la consultation d'une table de correspondance entre des natures de flux de données et des labels de commutation.

4. Procédé de transmission d'un flux de données selon l'une des revendications précédentes, dans lequel ledit label de commutation (432) comprend en outre des informations sur la nature dudit flux de données.

5. Procédé de transmission d'un flux de données selon l'une des revendications précédentes, comprenant en outre une étape (530) d'analyse de la qualité des liens RF préalable à la détermination (531) d'un label de commutation à insérer dans le flux de données.

6. Procédé de transmission d'un flux de données selon l'une des revendications précédentes, dans lequel la retransmission dudit flux de données par ledit concentrateur comprend une étape d'extraction (620) du label de commutation dudit flux de données, et lorsque ledit label indique que le flux de données est transmis selon une route indirecte :
• une étape de modification (630) du label de commutation du flux de données, de manière à indiquer que le flux de données est transmis selon une route directe, et
• une étape de transmission du flux de données modifié.

7. Procédé de transmission d'un flux de données selon l'une des revendications précédentes, dans lequel les flux de données transmis selon une route directe et les flux de données transmis selon une route indirecte utilisent des mêmes ressources fréquentielles.

8. Procédé de transmission d'un flux de données selon l'une des revendications précédentes, dans lequel ledit entête du flux de données est un entête de la couche MAC.

9. Procédé d'émission d'un flux de données dans un réseau satellitaire comprenant au moins un concentrateur (310), **caractérisé en ce qu'**il comprend les étapes de :
• identification (520) de la nature dudit flux de données,
• détermination (531) d'un label de commutation à insérer dans le flux en fonction de sa nature, ledit label de commutation indiquant si le flux de données est transmis au récepteur selon une route directe ou s'il est transmis au récepteur selon une route indirecte via ledit concentrateur,
• insertion (540, 550, 570) dudit label de commutation dans le flux de données, et
• transmission du flux de données contenant ledit label de commutation.

10. Emetteur (110) transmettant un flux de données dans un réseau satellitaire comprenant au moins un concentrateur (310), **caractérisé en ce qu'**il est configuré mettre en oeuvre un procédé d'émission d'un flux de données selon la revendication précédente.

11. Procédé de retransmission d'un flux de données émis par un émetteur (110) à destination d'au moins un récepteur (120) dans un réseau satellitaire, **caractérisé en ce qu'**il comprend une étape d'extraction (620) d'un label de commutation dudit flux de données, ledit label indiquant si le flux de données est transmis selon une route directe ou s'il est transmis selon une route indirecte via ledit concentrateur, et lorsque ledit label indique que le flux de données est transmis selon une route indirecte :
• une étape de modification (630) du label de commutation du flux de données, de manière à indiquer qu'il est transmis selon une route directe, et
• une étape de transmission (650) du flux de données modifié.

12. Procédé de retransmission d'un flux de données selon la revendication précédente, dans lequel le label de commutation contient en outre une information sur la nature du flux de données transmis, cette information étant utilisée pour l'ordonnancement de files d'attentes lors de la retransmission du flux de données modifié.

13. Concentrateur, dans un réseau satellitaire comprenant au moins un émetteur transmettant un flux de données vers un récepteur, ledit flux de données contenant un label de commutation, **caractérisé en ce qu'**il est configuré pour mettre en oeuvre un procédé de retransmission d'un flux de données selon l'une des revendications 11 à 12.

14. Procédé de réception d'un flux de données dans un réseau satellitaire comprenant au moins un concentrateur (310), **caractérisé en ce qu'**un label de commutation est extrait (720) dudit flux de données, ledit label indiquant si le flux de données est transmis par un émetteur (110) selon une route directe ou s'il est transmis par un émetteur selon une route indirecte via ledit concentrateur, et **en ce que** le flux de données est traité en fonction dudit label de commutation extrait.

15. Procédé de réception d'un flux de données selon la revendication précédente, dans lequel le flux de données reçu est rejeté lorsque ledit label de commutation indique que le flux de données est transmis selon une route indirecte.

16. Procédé de réception d'un flux de données selon la revendication 14, dans lequel le flux de données reçu est mémorisé (730) lorsque ledit label de commutation indique que le flux de données est transmis selon une route indirecte, et utilisé (750) lorsque la réception du même flux de données avec un label de commutation indiquant qu'il est transmis selon une route indirecte est erronée.

17. Récepteur (120), dans un réseau satellitaire comprenant au moins un concentrateur (310), **caractérisé en ce qu'**il est configuré pour mettre en oeuvre un procédé de réception d'un flux de données selon l'une des revendications 14 à 16.

## Patentansprüche

1. Verfahren zum Übertragen eines Datenflusses zwischen einem Aussender (110) und mindestens einem Empfänger (120) in einer Satellitenanordnung umfassend einen Konzentrator (310), wobei das Verfahren **dadurch gekennzeichnet ist, dass** eine Umschaltmarkierung (432) in eine Kopfzeile des Datenflusses gemäß seiner Art eingefügt wird, wobei die Umschaltmarkierung angibt, ob der Datenfluss an den Empfänger gemäß einem direkten Weg übertragen wird, oder ob er an den Empfänger gemäß einem indirekten Weg über den Konzentrator übertragen wird, und dadurch, dass, wenn die Umschaltmarkierung angibt, dass der Datenfluss gemäß einem indirekten Weg übertragen wird, der Konzentrator die Umschaltmarkierung des Datenflusses modifiziert, um anzugeben, dass er gemäß einem direkten Weg übertragen wird, und er den modifizierten Datenfluss wieder überträgt.

2. Verfahren zum Übertragen eines Datenflusses nach dem vorherigen Anspruch, wobei das Einfügen der Umschaltmarkierung die folgenden Schritte umfasst:
• Identifizierung (520) der Art des Datenflusses,
• Bestimmung (531) einer Umschaltmarkierung, die in den Datenfluss abhängig von seiner Art eingefügt werden soll, und
• Einfügung (540, 550, 570) der Umschaltmarkierung in den Datenfluss.

3. Verfahren zum Übertragen eines Datenflusses nach dem vorherigen Anspruch, wobei der Bestimmungsschritt einer Umschaltmarkierung, die in den Fluss eingefügt werden soll, die Abfrage einer Entsprechungstabelle zwischen Datenflussarten und Umschaltmarkierungen umfasst.

4. Verfahren zum Übertragen eines Datenflusses nach einem der vorherigen Ansprüche, wobei die Umschaltmarkierung (432) unter anderem Informationen über die Art des Datenflusses umfasst.

5. Verfahren zum Übertragen eines Datenflusses nach einem der vorherigen Ansprüche, unter anderem umfassend einen Schritt (530) zur Analyse der Qualität von Funkverbindungen vor der Bestimmung (531) einer Umschaltmarkierung, die in den Datenfluss eingefügt werden soll.

6. Verfahren zum Übertragen eines Datenflusses nach einem der vorherigen Ansprüche, wobei die erneute Übertragung des Datenflusses durch den Konzentrator einen Extraktionsschritt (620) der Umschaltmarkierung aus dem Datenfluss umfasst, und wenn die Markierung angibt, dass der Datenfluss gemäß einem indirekten Weg übertragen wird:
• einen Modifizierungsschritt (630) der Umschaltmarkierung des Datenflusses, um anzugeben, dass der Datenfluss gemäß einem direkten Weg übertragen wird, und
• einen Übertragungsschritt des modifizierten Datenflusses.

7. Verfahren zum Übertragen eines Datenflusses nach einem der vorherigen Ansprüche, wobei die Datenflüsse, die gemäß einem direkten Weg übertragen werden, und die Datenflüsse, die gemäß einem indirekten Weg übertragen werden, dieselben Frequenzressourcen verwenden.

8. Verfahren zum Übertragen eines Datenflusses nach einem der vorherigen Ansprüche, wobei die Kopfzeile des Datenflusses eine Kopfzeile der MAC-Schicht ist.

9. Emissionsverfahren eines Datenfluss in einer Satellitenanordnung umfassend mindestens eine Konzentrator (310), **dadurch gekennzeichnet, dass** es die folgenden Schritte umfasst:
• Identifizierung (520) der Art des Datenflusses,
• Bestimmung (531) einer Umschaltmarkierung, die in den Datenfluss abhängig von seiner Art eingefügt werden soll, wobei die Umschaltmarkierung angibt, ob der Datenfluss an den Empfänger gemäß einem direkten Weg übertragen wird, oder ob er an den Empfänger gemäß einem indirekten Weg über den Konzentrator übertragen wird,
• Einfügung (540, 550, 570) der Umschaltmarkierung in den Datenfluss, und
• Übertragung des Datenflusses, der die Umschaltmarkierung enthält.

10. Aussender (110), der einen Datenfluss in einer Satellitenanordnung umfassend mindestens einen Konzentrator (310) überträgt, **dadurch gekennzeichnet, dass** er konfiguriert ist, um ein Emissionsverfahren eines Datenflusses nach dem vorherigen Anspruch einzusetzen.

11. Verfahren zum erneuten Übertragen eines Datenflusses, der von einem Aussender (110) mit dem Ziel von mindestens einem Empfänger (120) in einer Satellitenanordnung ausgesendet wird, **dadurch gekennzeichnet, dass** es einen Extraktionsschritt (620) einer Umschaltmarkierung des Datenflusses umfasst, wobei die Markierung angibt, ob der Datenfluss gemäß einem direkten Weg übertragen wird, oder ob er gemäß einem indirekten Weg über den Konzentrator übertragen wird, und wenn die Markierung angibt, dass der Datenfluss gemäß einem indirekten Weg übertragen wird:
• einen Modifizierungsschritt (630) der Umschaltmarkierung des Datenflusses, um anzugeben, dass er gemäß einem direkten Weg übertragen wird, und
• einen Übertragungsschritt (650) des modifizierten Datenflusses.

12. Verfahren zur erneuten Übertragung eines Datenflusses nach dem vorherigen Anspruch, wobei die Umschaltmarkierung unter anderem eine Information über die Art des übertragenen Datenflusses enthält, wobei diese Information zur Ablaufplanung von Warteschlangen bei der erneuten Übertragung des modifizierten Datenflusses verwendet wird.

13. Konzentrator in einer Satellitenanordnung, umfassend mindestens einen Aussender, der einen Datenfluss zu einem Empfänger überträgt, wobei der Datenfluss eine Umschaltmarkierung enthält, **dadurch gekennzeichnet, dass** er konfiguriert ist, um ein Verfahren zur erneuten Übertragung eines Datenflusses nach einem der Ansprüche 11 bis 12 einzusetzen.

14. Verfahren zum Empfang eines Datenflusses in einer Satellitenanordnung umfassend mindestens einen Konzentrator (310), **dadurch gekennzeichnet, dass** eine Umschaltmarkierung aus dem Datenfluss extrahiert (720) wird, wobei die Markierung angibt, ob der Datenfluss von einem Aussender (110) gemäß einem direkten Weg übertragen wird, oder ob er von einem Aussender gemäß einem indirekten Weg über den Konzentrator übertragen wird, und dadurch, dass der Datenfluss abhängig von der extrahierten Umschaltmarkierung behandelt wird.

15. Verfahren zum Empfang eines Datenflusses nach dem vorherigen Anspruch, wobei der empfangene Datenfluss abgelehnt wird, wenn die Umschaltmarkierung angibt, dass der Datenfluss gemäß einem indirekten Weg übertragen wird.

16. Verfahren zum Empfang eines Datenflusses nach dem Anspruch 14, wobei der empfangene Datenfluss gespeichert (730) wird, wenn die Umschaltmarkierung angibt, dass der Datenfluss gemäß einem indirekten Weg übertragen wird, und verwendet (750) wird, wenn der Empfang desselben Datenflusses mit einer Umschaltmarkierung, die angibt, dass er gemäß einem indirekten Weg übertragen wird, falsch ist.

17. Empfänger (120) in einer Satellitenanordnung umfassend mindestens einen Konzentrator (310), **dadurch gekennzeichnet, dass** er konfiguriert ist, um ein Empfangsverfahren eines Datenflusses gemäß einem der Ansprüche 14 bis 16 einzusetzen.

## Claims

1. Method for transmitting a data stream between a transmitter (110) and at least one receiver (120) in a satellite network comprising a concentrator (310), the method being **characterized in that** a switching label (432) is inserted into a header of the data stream according to its nature, said switching label indicating whether the data stream is transmitted to the receiver along a direct route or whether it is transmitted to the receiver along an indirect route via said concentrator, and **in that**, when said switching label indicates that the data stream is transmitted along an indirect route, said concentrator modifies the switching label of the data stream in order to indicate that it is transmitted along a direct route, and retransmits the modified data stream.

2. Method for transmitting a data stream according to the preceding claim, in which the insertion of said switching label comprises the steps of:
• identifying (520) the nature of said data stream;
• determining (531) a switching label to be inserted into the data stream depending on its nature; and
• inserting (540, 550, 570) said switching label into the data stream.

3. Method for transmitting a data stream according to the preceding claim, in which the step of determining a switching label to be inserted into the stream comprises consulting a lookup table of correspondences between natures of data streams and switching labels.

4. Method for transmitting a data stream according to one of the preceding claims, in which said switching label (432) additionally comprises information on the nature of said data stream.

5. Method for transmitting a data stream according to one of the preceding claims, additionally comprising a step (530) of analysing the quality of the RF links prior to determining (531) a switching label to be inserted into the data stream.

6. Method for transmitting a data stream according to one of the preceding claims, in which the retransmission of said data stream by said concentrator comprises a step of extracting (620) the switching label from said data stream, and, when said label indicates that the data stream is transmitted along an indirect route:
• a step of modifying (630) the switching label of the data stream, so as to indicate that the data stream is transmitted along a direct route; and
• a step of transmitting the modified data stream.

7. Method for transmitting a data stream according to one of the preceding claims, in which the data streams transmitted along a direct route and the data streams transmitted along an indirect route use the same frequency resources.

8. Method for transmitting a data stream according to one of the preceding claims, in which said header of the data stream is a header of the MAC layer.

9. Method for transmitting a data stream in a satellite network comprising at least one concentrator (310), **characterized in that** it comprises the steps of:
• identifying (520) the nature of said data stream;
• determining (531) a switching label to be inserted into the data stream depending on its nature, said switching label indicating whether the data stream is transmitted to the receiver along a direct route or whether it is transmitted to the receiver along an indirect route via said concentrator;
• inserting (540, 550, 570) said switching label into the data stream; and
• transmitting the data stream containing said switching label.

10. Transmitter (110) transmitting a data stream in a satellite network comprising at least one concentrator (310), **characterized in that** it is configured to implement a method for transmitting a data stream according to the preceding claim.

11. Method for retransmitting a data stream transmitted by a transmitter (110) to at least one receiver (120) in a satellite network, **characterized in that** it comprises a step of extracting (620) a switching label from said data stream, said label indicating whether the data stream is transmitted along a direct route or whether it is transmitted along an indirect route via said concentrator, and, when said label indicates that the data stream is transmitted along an indirect route:
• a step of modifying (630) the switching label of the data stream, so as to indicate that it is transmitted along a direct route; and
• a step of transmitting (650) the modified data stream.

12. Method for retransmitting a data stream according to the preceding claim, in which the switching label additionally contains information on the nature of the transmitted data stream, this information being used to schedule the queues during the retransmission of the modified data stream.

13. Concentrator, in a satellite network comprising at least one transmitter transmitting a data stream to a receiver, said data stream containing a switching label, **characterized in that** it is configured to implement a method for retransmitting a data stream according to one of Claims 11 to 12.

14. Method for receiving a data stream in a satellite network comprising at least one concentrator (310), **characterized in that** a switching label is extracted (720) from said data stream, said label indicating whether the data stream is transmitted by a transmitter (110) along a direct route or whether it is transmitted by a transmitter along an indirect route via said concentrator, and **in that** the data stream is processed according to said extracted switching label.

15. Method for receiving a data stream according to the preceding claim, in which the received data stream is rejected when said switching label indicates that the data stream is transmitted along an indirect route.

16. Method for receiving a data stream according to Claim 14, in which the received data stream is memorized (730) when said switching label indicates that the data stream is transmitted along an indirect route, and used (750) when the reception of the same data stream with a switching label indicating that it is transmitted along an indirect route is erroneous.

17. Receiver (120) in a satellite network comprising at least one concentrator (310), **characterized in that** it is configured to implement a method for receiving a data stream according to one of Claims 14 to 16.
